# EUROPEAN PATENT SPECIFICATION

(11) **EP 2 760 321 B1**
(45) Date of publication and mention of the grant of the patent: **08.04.2015**
(21) Application number: 12762314.8
(22) Date of filing: 26.09.2012
(51) Int. Cl.: A47J 31/54, A47J 31/46

(54) **HOT BEVERAGE PRODUCTION DEVICE**
VORRICHTUNG ZUR HERSTELLUNG VON HEISSGETRÄNKEN
DISPOSITIF DE PRODUCTION DE BOISSON CHAUDE

(30) Priority: 26.09.2011 EP 11182702
(43) Date of publication of application: 06.08.2014
(73) Proprietor: Nestec S.A., 1800 Vevey (CH)
(72) Inventor: Ozanne, Matthieu, F-74500 Publier (FR); VUAGNIAUX, Didier, CH-1188 Gimel (CH)
(74) Representative: Ducreux, Marie
(86) International application number: PCT/EP2012/068988
(87) International publication number: WO 2013/045507

(56) References cited:
- EP-A1- 1 462 040
- WO-A1-02/074684
- WO-A1-2007/131395
- WO-A1-2009/135899
- US-A- 5 678 734

## Description

### Field of the invention

The present invention relates to a beverage production device for preparing a beverage from a beverage ingredient and hot water. More particularly, the invention relates to such a device in which water is heated and made to interact with a beverage ingredient in a beverage production chamber, the beverage ingredient particularly being contained in pre-portioned form in a closed capsule.

### Background of the invention

Devices for preparing a beverage by injecting, for instance, pressurized fluid to a capsule are well-known, especially in the field of producing tea, coffee or coffee type beverages. In addition, other substances such as chocolate or milk products can be extracted or dissolved to form a beverage. The advantages of such a system are in particular the conservation and freshness of the ingredients, as well as the possibility of facilitating the operations when preparing the beverage.

It should be understood that the interaction between the liquid and the ingredients within, for example, the capsule can be e.g. dissolving, extraction, brewing or any other interaction in order to prepare a beverage by means of ingredients provided within the capsule. Such a capsule is yet known from the patent documents WO 2007/042414 A1 and WO 2008/025730 A1 and mainly comprises an enclosure defined by a housing or shell and a filtering means.

When, for instance, preparing tea in such a device a problem occurs due to the presence of air in the liquid (e.g. water) being delivered to the capsule. This air mainly comes from the heating of the water which is carried out by a heater provided in the supply means for supplying the liquid to the beverage production chamber of the device. The air or air bubbles appear as soon as the liquid (water) temperature reaches about 70°C. The air is thus introduced with the liquid into the capsule but tends to not traverse the filter means (generally a paper filter) that is placed inside the capsule as described above. As in a low pressure water flow, which is present when preparing e.g. tea, there is no important stirring of water and of the product to be brewed (beverage ingredient like powder), the air bubbles can separate from the liquid, slowly raise to the top of the beverage production chamber like a capsule, for instance, and stay behind the filter inside the capsule. Their volume grows as long as water is injected inside the capsule. However, this volume can become so important that, for instance, the tea leaves are no longer properly immersed inside the liquid (water) and the tea can thus be not sufficiently extracted.

The elimination of air from the fluid system presents also the advantahe of improving the priming of the pump.

WO 2009/135899 proposes a solution to this problem consisting in treating hot water issued from the heater and containing air in an air separating device before introducing the hot water in the capsule. The air separating device consists in a labyrinth in which the kinetic energy of the hot water is broken enabling the separation of air from water.

Although this solution is efficient, this air separating device represents a certain cost and increases the cost of the final beverage machine. Moreover, it increases the size of the machine.

There is therefore a need for an alternative solution for discharging air from hot water that is less costly.

### Summary of the invention

The invention concerns a beverage production device comprising :
- a beverage production chamber designed to have a liquid interact with a beverage ingredient,
- a pump for pumping the liquid,
- a heater for heating the pumped liquid, wherein the heater comprises :
   - a chamber presenting an inlet for the introduction of the liquid and an outlet for the discharge of the liquid,
   - a heating body contained in the chamber,
   and wherein :
   - the liquid outlet is placed in or near the top side of the heater chamber, and
   - the chamber of the heater comprises an outlet for the discharge of air, said air outlet being arranged at a position higher than the liquid outlet with respect to the horizontal.

The beverage production device comprises a pump which generally pumps cold liquid, preferably cold water, from a liquid source like a tank. The pump provides the pumped water to the heater for heating the liquid.

The heater comprises a chamber in which the liquid is introduced for heating. The chamber comprises an inlet for the introduction of the cold pumped liquid. The chamber comprises an outlet for the discharge of the hot pumped liquid. The liquid outlet is connected directly or indirectly to the beverage production chamber. According to the invention the liquid outlet is placed in or near the top side of the heater chamber. Preferably the outlet is positioned substantially on the external periphery of the heater chamber top side. The inlet can be placed in any part of the chamber. Preferably the air outlet and the liquid outlet of the heater chamber are sufficiently distant so that air cannot be sucked by the water flow through the water outlet.

According to the invention the heater also comprises an outlet for discharging air. This air outlet can be connected to a waste compartment or a breather means. The air outlet is arranged in the heater chamber at a position higher than the liquid outlet with respect to the horizontal. As air contained in the pumped liquid is lighter than liquid (e.g. water) and thus rises to an upper portion of the chamber, it can easily be evacuated from the chamber while the liquid can be evacuated through the liquid outlet arranged at a lower position. Hence, air is prevented from being introduced in the liquid outlet and sent to the beverage production chamber. Most preferably the air outlet is positioned at the highest vertical point of the chamber.

According to a first embodiment, the heater chamber is tilted so that the air outlet is at a position higher than the liquid outlet with respect to the horizontal. Preferably the heater chamber is tilted so that the air outlet is at or near the highest position of the heater chamber when the heater chamber is fixed in the beverage production device. The heater chamber can be tilted so that its longitudinal axis presents an angle with the vertical axis of at least 1 °, preferably at least 5°, and even more preferably comprised between 5° and 20°. Generally the heater chamber presents an essentially cylindrical shape. Usually the air outlet and the liquid outlet are on the same side of the chamber, preferably on the same side.

According to a second embodiment, the chamber presents essentially the shape of a cylinder, said cylinder being truncated on at least its upper base, and the air outlet is positioned on said upper truncated base of the chamber cylinder. The cylinder is preferably positioned in the machine so that its longitudinal axis is vertical. The heater chamber cylinder can be truncated by a plan presenting an angle α with the plan perpendicular to the chamber longitudinal axis of at least 1°, preferably at least 5°, and even more preferably comprised between 5° and 20°.

The advantage of the two above preferred embodiments is that all the air bubbles of the heated liquid automatically flow up and converge to one point that is the highest point of the chamber that can be the corner between two walls of the chamber.

The time of residence of the liquid in the chamber is preferably sufficiently long for simultaneously enabling the heating of the cold liquid and the separation of the air from the liquid. This residence time can be controlled by the length of the liquid path in the heater chamber, consequently the liquid inlet and the liquid outlet of the heater chamber are usually positioned at opposite parts of the chamber, preferably in opposite sides of the chamber. According to the preferred embodiment the liquid inlet is placed in the bottom of the heater chamber. Usually the heater is positioned in the beverage production device so that it presents a top and a bottom side and the liquid inlet is in the heater chamber bottom side and the liquid outlet is in the heater chamber top side. The residence time of the liquid can be also be controlled by the size of the internal volume of the heater chamber. It can also be controlled by the value of the flow of the liquid entering in the chamber.

A heating body is contained in the chamber in order to contact the pumped liquid and transfer its heat to the liquid. Usually the heating body is resistive elements, preferably put in the form of a spiral or a helicoid, embedded in a heat conductive matrix. According to a preferred embodiment the heating body has the shape of a spiral and the heater chamber can be hollowed along its central axis so as to form a ring in which the spiral fits.

Preferably the process for using the heater is configured for not producing steam but only hot water presenting a temperature of at most 90 °C.

Preferably the liquid outlet of the heater chamber is connected to a liquid valve and the air outlet of the heater chamber is provided with a air valve. By means of the liquid valve, the value of the pressure at which the valve is opened can be set to a liquid pressure needed for the liquid to be supplied to the beverage production chamber and for beverage production. This valve can be placed either directly at the outlet of the heater chamber or downstream near from the beverage production chamber. By means of the air valve, sufficient deaeration of the liquid can be attained without any liquid escaping through said valve. Preferably the value of pressure for opening the liquid valve is greater than that of the air valve. Then deaeration can already be accomplished before liquid is evacuated from the heater chamber. Hence, the chance of separated air to be mixed again with airless liquid is reduced and thus, the liquid being supplied to the beverage production chamber merely contains a minimum of air or other gas. The value of pressure for opening the first valve can be at least 0,2 bar, preferably at least 0,4 bar. Thus, the liquid is supplied to the beverage production chamber at an appropriate pressure for beverage production.

According to another preferred aspect of the invention, the heater is provided with a temperature sensor. Said temperature sensor can be placed near or in the heater chamber outlet tube. Then the temperature of the liquid flowing out of the liquid heater can be directly measured by the sensor: the sensor is immersed in the liquid flow. Preferably the heating body of the chamber is operatively connected to the temperature sensor. The pump can also be operatively connected to the temperature sensor: the operative connection consists in activating the pump only when the temperature sensor indicates that the temperature of the liquid at the outlet of the heater chamber reaches the temperature set for preparing a beverage.

The invention also concerns a particular embodiment of the heater wherein :
- the air outlet is provided with an air valve,
- the heater is provided with a temperature sensor,
- the heating body has the shape of a spiral and the heater chamber is hollowed along its central axis so as to form a ring in which the spiral fits, and
and wherein the heater comprises a common bracket for attaching an outlet connector to the beverage production chamber, the air valve and the temperature sensor to the heater chamber.

The beverage production chamber of the device of the present invention is generally a brewing chamber configured to receive an infusable food ingredient and hot water. In the brewing process, the heated water infuses and extracts flavours from the brewing substance. The brewing chamber can contain a filter means to allow beverage to drain from the infused food ingredient and water mixture. It can be configured to be hermetically closed to receive and hold the diluent under pressure and to retain the infusable food ingredient. The infusable food ingredient can be roast and ground coffee, tea leaves, herbs, botanicals, as well as other substances. It is preferably tea leaves. According to the preferred embodiment the beverage production chamber is configured for receiving a capsule containing the beverage ingredient, the capsule comprising an enclosure and a filtering wall, the filtering wall being vertically oriented.

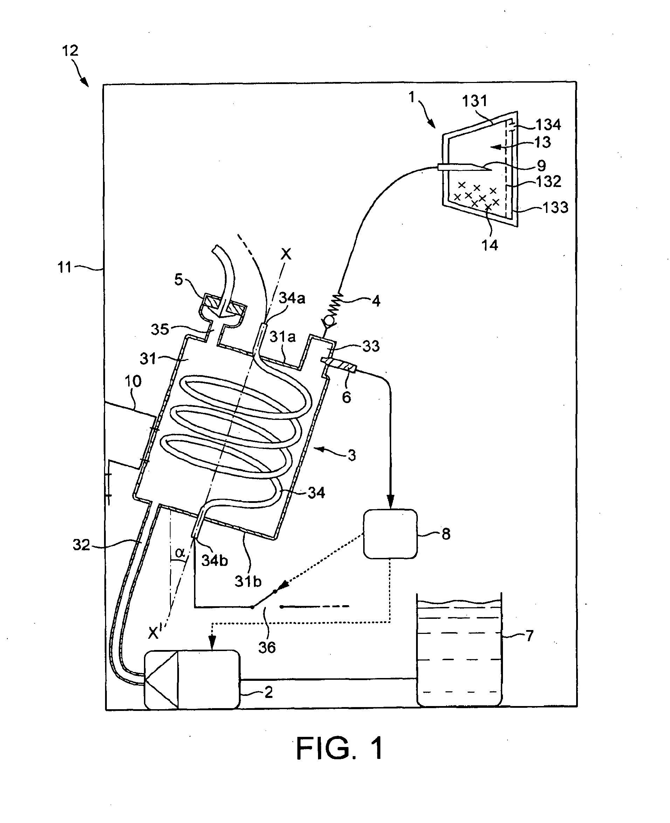

In the present application the terms "top" and "bottom", "upper" and "lower" are used to describe the relational positioning of features of the invention. These terms should be understood to refer to the heater in its normal orientation when inserted in the beverage production device as shown for example in Figures 1 to 4.

### Brief description of the drawings

The characteristics and advantages of the invention will be better understood in relation to
- Figure 1 which is a schematic diagram of the fluid system of a beverage dispenser according to the present invention,
- Figure 2 which is a schematic diagram of the fluid system of a beverage dispenser according to an alternative.
- Figure 3 is vertical section of a heater configured to be used in a beverage production device according to the present invention.
- Figure 4 is a perspective view of the heater of Figure 3,
- Figure 5 is a perspective view of the bracket of the heater of Figure 4,
- Figure 6 is a perspective view of the assembly of the bracket of Figure 5 and other elements of the heater.

### Detailed description of the drawings

**Figure 1** shows a preferred embodiment of a beverage production device according to the present invention comprising a beverage production chamber 1 in which an injection member 9, preferably a needle, introduces a hot liquid. The beverage production device 12 of said embodiment further comprises a liquid reservoir 7, such as a water tank, a liquid pump 2, a heater 3 and a liquid supply line connecting these different devices. The beverage production device 1 also comprises a controller 8 to manage the beverage preparation cycles as known in the art. The pump 2 pumps the liquid from the reservoir 7 and introduces it in the chamber 31 of the heater 3 through an inlet 32 at the bottom side 31 b of the chamber. The heater chamber comprises a heating body 34 that is a resistive element presenting the shape of a spiral. Yet the invention is not limited to this form of the heating body, other shapes could be used. The resistive element is connected to the electric power through electric supplies 34a, 34b placed at each extremity of the heating body. The chamber comprises a liquid outlet 33 at its top side 31 a connected to the beverage production device 1. The chamber comprises also an air outlet 35 at its top side 31a. The heater is oriented so that the air outlet 35 is positioned above the liquid outlet 33 with respect to the horizontal. This orientation is obtained by leaning the boiler in the beverage production device so that the longitudinal axis XX' of the boiler presents an angle α with the vertical axis. The longitudinal axis corresponds to the axis passing through the heater chamber bottom side and the heater chamber top side. In practice the specific orientation of the boiler can be obtained by fixing the heater 3 to the housing 11 of the beverage production device by means of a supporting element 10 configured for reaching this specific orientation. For example, the supporting element can be a bracket 10 presenting a part attached to the housing 11 of the beverage production device 12 and another part attached to the body of the heater 3, the two parts being oriented one relative to the other so as to lean the heater and have the air outlet arranged at a higher position than the liquid outlet.

The liquid outlet 33 is provided with a first valve 4. This valve can be of any known valve type used in such beverage production devices as, for instance, a check valve. Said valve is preferably designed such that it opens at a predetermined threshold pressure value. Said threshold pressure value for opening the first valve 4 can, for instance, be at least 0,2 bar, more preferably at least 0,4 bar. Hence, the liquid is supplied to the beverage production chamber 1 at an appropriate pressure for beverage production.

The air outlet 35 is provided with a second valve 5 for delivering air from the heater chamber to a waste compartment and/or a breather means. It has to be noted that the term "air" is used substantially for any kind of gases and is not limited to air. The second valve 5 is designed such it stays open when air is present in front of the valve but the valve 5 is closed immediately in case liquid appears. Such valve type is commonly known in the state of the art (cf. WO 02/088580 A1) and provides a sufficient deaeration without any liquid escaping through said valve. In a preferred embodiment of the invention the value of pressure for opening the first valve 4 is greater than the value of pressure for opening the second valve 5 such that deaeration can already be accomplished before liquid is evacuated from the chamber 31. Hence, the chance of separated air to be mixed again with airless liquid is reduced and thus, the liquid being supplied to the beverage production chamber 1 contains a minimum of air.

This valve also presents the advantage of enabling the priming of the pump of the beverage production device when it is used for the first time or further to its unpriming if the water tank is suddenly empty. Air in the pump and in the fluid pipes is evacuated through this valve.

The temperature of the liquid at the heater chamber outlet 33 is monitored by the control unit through a temperature sensor 6 placed in the liquid outlet; the control unit operates the heater body command 36 accordingly. The temperature sensor is also operatively linked to the pump : once the temperature is sufficient for producing a beverage, the controller activates the pump so that the hot liquid flows in the chamber outlet : the pressure in the chamber outlet raises until the pressure opening of the first valve 4 is reached and the valve opens.

Preferably the chamber presents an internal volume sufficient to dampen the flow of the liquid entering in it. Hence, it is possible to reduce the liquid flow velocity such that air or gas is not carried along inside the liquid by the speed of the liquid, and the air can thus rise in order to be evacuated by the air outlet, and the separation of air from the heated liquid is realised.

The beverage production chamber 1 is configured for receiving a capsule 13 comprising a beverage ingredient 14. The chamber 1 can comprise handling members for handling the capsule. The capsule mainly comprises an enclosure 131 containing the beverage ingredients 14 such as leaf tea and the like. The enclosure 131 is preferably demarcated by a cup-shaped housing and a filtering wall 132. The beverage production chamber 1 is preferably configured for holding the capsule in a vertical orientation that is with the filter 132 vertically oriented as illustrated in the figures. The capsule can be closed by a sealing wall 133 that overlaps the filtering wall. The sealing wall 133 can present a beverage outlet 134, preferably at an overflow location, or the chamber can be provided with a puncture element for opening an outlet 134 in the sealing wall, preferably at an overflow location of the enclosure 131. Due to the elimination of air and gases from the liquid in the heater, the air does not enter in the capsule and avoids that bubbles stagnate in the upper part of the capsule near from the outlet 134, avoiding a good beverage preparation. Notwithstanding the above description, the capsule 20 is not limited to any size or design, and there can also be used any other known beverage ingredient storage means or beverage production chambers also comprising a filter element for preparation of a beverage by extraction of beverage ingredients with heated liquids, preferably heated low-pressure liquids. In the following, liquid stands for all kinds of liquids for being used in a beverage production device as, for instance, water.

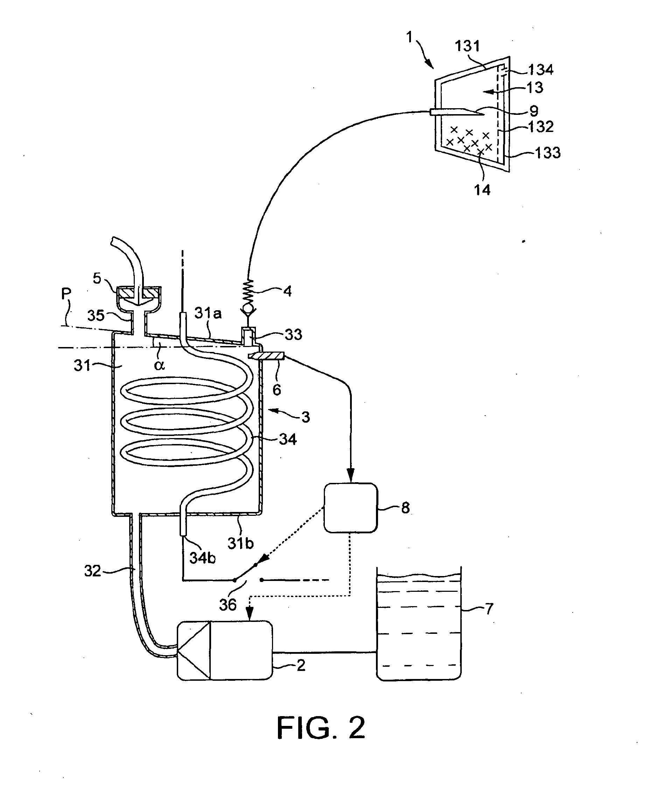

**Figure 2** shows an alternative embodiment of a beverage production machine of the present invention. The only difference with the machine of Figure 1 is that the heater chamber is a cylinder presenting an upper base 31a that is truncated. The heater chamber cylinder is positioned with its longitudinal axis XX' vertically oriented in the machine and the plan P of the truncated upper base 31a presents an angle α with the plan perpendicular to the longitudinal axis XX', that is a horizontal plan in Figure 2. This angle is of at least 1° with the horizontal, preferably at least 5°, and even more preferably comprised between 5° and 20°. The air outlet 35 is positioned at the highest position of the truncated upper base 31 a.

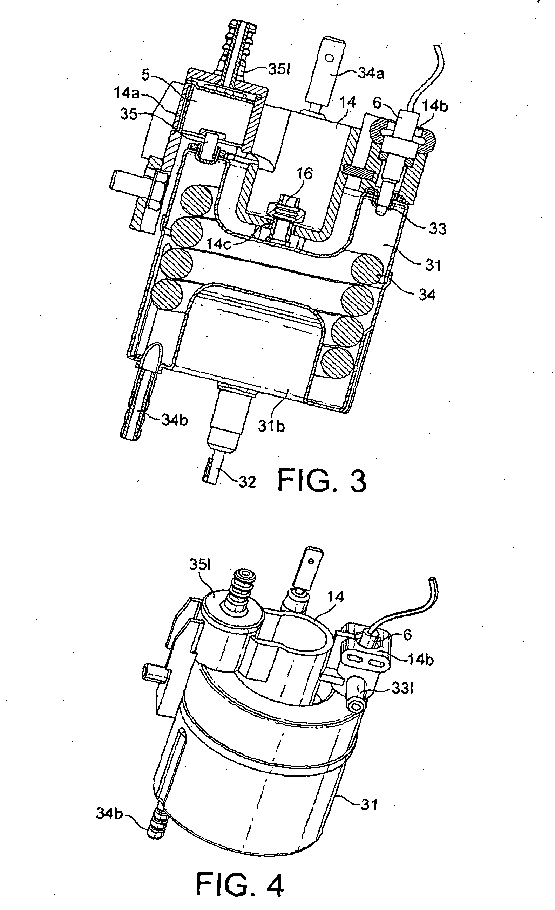

**Figure 3** shows a vertical section view of a heater that can be used according to the present invention. The same reference numbers are used for the parts identical in Figures 1 and 2. The heater chamber comprises a heating body 34 that is a resistive element presenting the shape of a spiral. The heater chamber 31 is hollowed along its central axis so as to form a ring in which the spiral of the heating body fits. The heater chamber 31 is hollowed by an upper hollowed part 31a and a bottom hollowed part 31 b.

At the liquid outlet 33 of the chamber a temperature sensor 6 senses the temperature of water before it is delivered out of the heater. The chamber comprises also an air outlet 35 at its top side 31 a. The air outlet 35 is provided with a second valve 5 for delivering air from the heater chamber. A cap 351 enables the connection to a downstream air tube.

For a quick connection during manufacturing the second valve 5, the temperature sensor 6 can be attached to the heater chamber by a common bracket 14. Said bracket can present three holes : a first one 14a in which the air valve 5 can fit, a second one 14b in which the temperature sensor 6 can fit and a third one 14c for attaching the bracket 14 to the chamber 31 e.g. with a screw 16.

**Figure 4** is a perspective view of the heater of Figure 3 viewed from the above in order to illustrate the interaction of the bracket 14 with the heater chamber 31, the air valve 5, the temperature sensor 6 and the hot liquid connection 331 to the beverage production chamber. In this particular embodiment of Figures 3 to 6 the hot liquid connector 331 is part of the bracket 14. It guides water from the chamber outlet 33 to the rest of the fluid system. A first valve can be placed just downstream of said connector as illustrated in Figures 1 and 2.

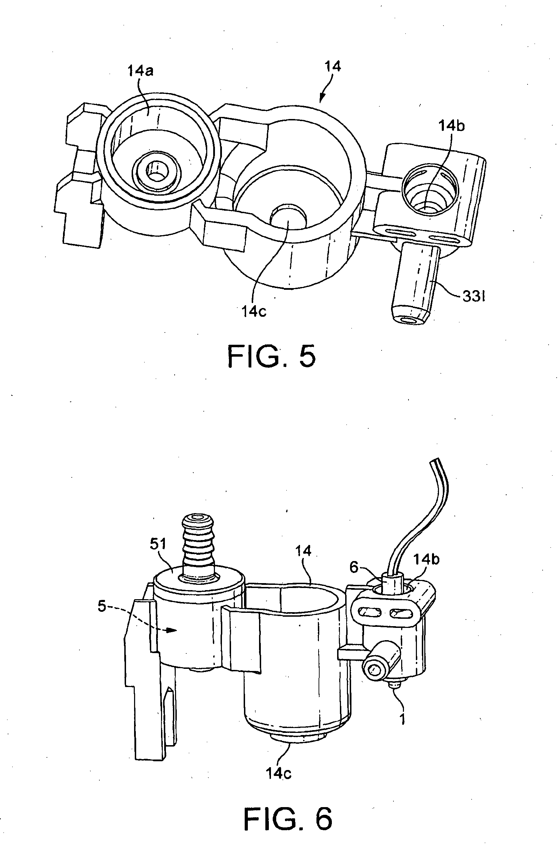

**Figure 5** is a perspective view of the bracket 14 alone enabling the identification of its different holes 14b, 14a, 14c for respectively introducing the temperatures sensor, the air valve and the screw for attachment to the heater chamber.

**Figure 6** is a perspective view of the bracket 14 with the temperature sensor 6 placed inside the hole 14b and the air valve 5 placed in the hole 14c with a cap 51 covering said valve and enabling the connection with a downstream pipe. It can be appreciated that during manufacturing these different elements can be firstly attached together and then the assembly of these elements can be easily fixed to the heater chamber by screw 16.

The device of the present invention presents the advantage of combining the functions of liquid heating and air discharging inside the single heater. Consequently, place is saved inside the beverage production device and the cost of production is lower.
- 1: beverage production chamber
- 2: pump
- 3: heater
- 31: heater chamber
- 31a: heater chamber top side
- 31b: heater chamber bottom side
- 32: heater liquid inlet
- 33: heater liquid outlet
- 331: liquid outlet connector
- 34: heating body
- 35: heater air outlet
- 36: heater command
- 4,5: valve
- 6: temperature sensor
- 7: tank
- 8: controller
- 9: needle
- 10: supporting element
- 11: housing
- 12: beverage production device
- 13: capsule
- 131: capsule enclosure
- 132: filtering wall
- 133: sealing wall
- 134: beverage outlet
- 14: bracket
- 14a, 14b , 14c: bracket holes
- 15a, 15b: hollowed parts of the heater chamber
- 16: screw

## Claims

1. A beverage production device (12) comprising :
- a beverage production chamber (1) designed to have a liquid interact with a beverage ingredient (14),
- a pump (2) for pumping the liquid,
- a heater (3) for heating the pumped liquid, wherein the heater comprises :
a chamber (31) presenting an inlet (32) for the introduction of the liquid and an outlet (33) for the discharge of the liquid,
a heating body (34) contained in the chamber,
wherein the chamber of the heater comprises an outlet (35) for the discharge of air, said air outlet being arranged at a position higher than the liquid outlet (33) with respect to the horizontal,
**characterised in that**:
- the liquid outlet (33) is placed at the top side (31a) of the heater chamber.

2. A beverage production device according to Claim 1, wherein the air outlet is positioned at the highest vertical point of the chamber.

3. A beverage production device according to Claim 1 or 2, wherein the air outlet (35) and the liquid outlet (33) of the heater chamber are sufficiently distant so that air is not sucked by the water flow through the water outlet (33).

4. A beverage production device according to any one of the precedent claims, wherein the heater chamber is tilted so that the air outlet (35) is at a position higher than the liquid outlet (33) with respect to the horizontal.

5. A beverage production device according to any one of the precedent claim, wherein the heater chamber is tilted so that the air outlet (35) is at or near the highest position of the heater chamber.

6. A beverage production device according to Claim 4 or 5, wherein the heater chamber is tilted so that its longitudinal axis (XX') presents an angle (α) with the vertical axis of at least 1 °, preferably at least 5°, and even more preferably comprised between 5° and 20°.

7. A beverage production device according to any of Claims 1 to 3, wherein the heater chamber presents essentially the shape of a cylinder, said cylinder being truncated on at least its upper base (31 a), and the air outlet (35) of the heater chamber is positioned on said upper truncated base (31 b) of the chamber cylinder.

8. A beverage production device according to Claim 7, wherein the heater chamber cylinder is truncated by a plan (P) presenting an angle (α) with the plan perpendicular to the chamber longitudinal axis (XX') of at least 1°, preferably at least 5°, and even more preferably comprised between 5° and 20°.

9. A beverage production device according to any one of the preceding claims, wherein the liquid inlet (32) and the liquid outlet (33) of the heater chamber are positioned at opposite parts (31 a, 31 b) of the chamber.

10. A beverage production device according to any one of the preceding claims, wherein the liquid outlet (33) is provided with a liquid valve (4) and the air outlet (35) is provided with an airvalve (5).

11. A beverage production device to claim 1, wherein the value of pressure for opening the liquid valve (4) is greater than that of the air valve (5).

12. A beverage production device according to any one of the preceding claims, wherein the heater is provided with a temperature sensor (6).

13. A beverage production device according to the preceding claim, wherein the heating body (34) is operatively connected to the temperature sensor (6).

14. A beverage production device according to any one of the preceding claims, wherein the heating body (34) has the shape of a spiral and the heater chamber (31) is hollowed along its central axis so as to form a ring in which the spiral fits.

15. A beverage production device according to Claim 1, wherein :
- the air outlet (35) is provided with an air valve (5),
- the heater is provided with a temperature sensor (6),
the heating body (34) has the shape of a spiral and the heater chamber (31) is hollowed along its central axis so as to form a ring in which the spiral fits,
and wherein the heater comprises a common bracket for attaching an outlet connector to the beverage production chamber (331), the air valve (5) and the temperature sensor (6) to the heater chamber (31).

## Patentansprüche

1. Getränkeherstellungsvorrichtung (12) mit:
- einer Getränkeherstellungskammer (1), die dazu ausgeführt ist, dass eine Flüssigkeit mit einer Getränkezutat (14) zusammenwirkt,
- einer Pumpe (2) zum Fördern der Flüssigkeit,
- einer Heizeinrichtung (3) zum Erhitzen der geförderten Flüssigkeit, wobei die Heizeinrichtung Folgendes umfasst:
• eine Kammer (31), die einen Einlass (32) zum Einführen der Flüssigkeit und einen Auslass (33) zum Abführen der Flüssigkeit aufweist,
• einen in der Kammer enthaltenen Heizkörper (34),
wobei die Kammer der Heizeinrichtung einen Auslass (35) für die Ableitung von Luft umfasst, wobei der Luftauslass an einer Position angeordnet ist, die bezüglich der Waagerechten höher ist als der Flüssigkeitsauslass (33),
**dadurch gekennzeichnet, dass**:
- der Flüssigkeitsauslass (33) an der Oberseite (31a) der Heizeinrichtungskammer platziert ist.

2. Getränkeherstellungsvorrichtung gemäß Anspruch 1, wobei der Luftauslass an der höchsten senkrechten Stelle der Kammer angebracht ist.

3. Getränkeherstellungsvorrichtung gemäß Anspruch 1 oder 2, wobei der Luftauslass (35) und der Flüssigkeitsauslass (33) der Heizeinrichtungskammer ausreichend voneinander entfernt sind, so dass von dem Wasserdurchfluss durch den Wasserauslass (33) keine Luft angesaugt wird.

4. Getränkeherstellungsvorrichtung gemäß einem der vorhergehenden Ansprüche, wobei die Heizeinrichtungskammer derart geneigt ist, dass sich der Luftauslass (35) an einer Position befindet, die bezüglich der Waagerechten höher als der Flüssigkeitsauslass (33) ist.

5. Getränkeherstellungsvorrichtung gemäß einem der vorhergehenden Ansprüche, wobei die Heizeinrichtungskammer derart geneigt ist, dass sich der Luftauslass (35) an oder nahe der höchsten Position der Heizeinrichtungskammer befindet.

6. Getränkeherstellungsvorrichtung gemäß Anspruch 4 oder 5, wobei die Heizeinrichtungskammer derart geneigt ist, dass ihre Längsachse (XX') einen Winkel (α) mit der senkrechten Achse von mindestens 1°, vorzugsweise mindestens 5°, und weiter bevorzugt zwischen 5° und 20° aufweist.

7. Getränkeherstellungsvorrichtung gemäß einem der Ansprüche 1 bis 3, wobei die Heizeinrichtungskammer im Wesentlichen die Form eines Zylinders aufweist, wobei der Zylinder zumindest an seiner oberen Grundfläche (31a) abgeschnitten ist, und der Luftauslass (35) der Heizeinrichtungskammer an dieser oberen abgeschnittenen Grundfläche (31b) des Kammerzylinders angebracht ist.

8. Getränkeherstellungsvorrichtung gemäß Anspruch 7, wobei der Heizeinrichtungskammerzylinder von einer Ebene (P) abgeschnitten ist, die einen Winkel (α) mit der Ebene senkrecht zu der Längsachse (XX') der Kammer von mindestens 1°, vorzugsweise mindestens 5° und weiter bevorzugt zwischen 5° und 20° aufweist.

9. Getränkeherstellungsvorrichtung gemäß einem der vorhergehenden Ansprüche, wobei der Flüssigkeitseinlass (32) und der Flüssigkeitsauslass (33) der Heizeinrichtungskammer an gegenüberliegenden Teilen (31a, 31b) der Kammer angebracht sind.

10. Getränkeherstellungsvorrichtung gemäß einem der vorhergehenden Ansprüche, wobei der Flüssigkeitsauslass (33) mit einem Flüssigkeitsventil (4) versehen ist und der Luftauslass (35) mit einem Luftventil (5) versehen ist.

11. Getränkeherstellungsvorrichtung gemäß Anspruch 1, wobei der Druckwert zum Öffnen des Flüssigkeitsventils (4) höher ist als der des Luftventils (5).

12. Getränkeherstellungsvorrichtung gemäß einem der vorhergehenden Ansprüche, wobei die Heizeinrichtung mit einem Temperaturfühler (6) versehen ist.

13. Getränkeherstellungsvorrichtung gemäß einem der vorhergehenden Ansprüche, wobei der Heizkörper (34) mit dem Temperaturfühler (6) in Wirkverbindung steht.

14. Getränkeherstellungsvorrichtung gemäß einem der vorhergehenden Ansprüche, wobei der Heizkörper (34) die Form einer Spirale aufweist und die Heizeinrichtungskammer (31) entlang ihrer Mittelachse hohl ist, so dass sie einen Ring ausbildet, in den die Spirale hineinpasst.

15. Getränkeherstellungsvorrichtung gemäß Anspruch 1, wobei:
- der Luftauslass (35) mit einem Luftventil (5) versehen ist,
- die Heizeinrichtung mit einem Temperaturfühler (6) versehen ist,
- der Heizkörper (34) die Form einer Spirale aufweist und die Heizeinrichtungskammer (31) entlang ihrer Mittelachse hohl ist, so dass sie einen Ring ausbildet, in den die Spirale hineinpasst,
und wobei die Heizeinrichtung eine gemeinsame Halterung umfasst, um einen Auslassstutzen an der Getränkeherstellungskammer (331), das Luftventil (5) und den Temperaturfühler (6) an der Heizeinrichtungskammer (31) zu befestigen.

## Revendications

1. Dispositif de production de boisson (12) comprenant :
- une chambre de production de boisson (1) conçue pour avoir une interaction d'un liquide avec un ingrédient de boisson (14),
- une pompe (2) pour pomper le liquide,
- un dispositif de chauffage (3) pour chauffer le liquide pompé, le dispositif de chauffage comprenant :
. une chambre (31) présentant une entrée (32) pour l'introduction du liquide et une sortie (33) pour l'évacuation du liquide,
. un corps chauffant (34) contenu dans la chambre,
dans lequel la chambre du dispositif de chauffage comprend une sortie (35) pour l'évacuation d'air, ladite sortie d'air étant agencée à une position plus haute que la sortie de liquide (33) par rapport à l'horizontale,
**caractérisé en ce que** :
- la sortie de liquide (33) est placée du côté supérieur (31a) de la chambre du dispositif de chauffage.

2. Dispositif de production de boisson selon la revendication 1, dans lequel la sortie d'air est positionnée au niveau du plus haut point vertical de la chambre.

3. Dispositif de production de boisson selon la revendication 1 ou 2, dans lequel la sortie d'air (35) et la sortie de liquide (33) de la chambre du dispositif de chauffage sont suffisamment distantes de sorte que de l'air n'est pas aspiré par l'écoulement d'eau à travers la sortie d'eau (33).

4. Dispositif de production de boisson selon l'une quelconque des revendications précédentes, dans lequel la chambre du dispositif de chauffage est inclinée de sorte que la sortie d'air (35) est à une position plus haute que la sortie de liquide (33) par rapport à l'horizontale.

5. Dispositif de production de boisson selon l'une quelconque des revendications précédentes, dans lequel la chambre du dispositif de boisson est inclinée de sorte que la sortie d'air (35) est à la plus haute position de la chambre du dispositif de chauffage ou proche de celle-ci.

6. Dispositif de production de boisson selon la revendication 4 ou 5, dans lequel la chambre du dispositif de chauffage est inclinée de sorte que son axe longitudinal (XX') présente un angle (α) avec l'axe vertical d'au moins 1°, de préférence d'au moins 5°, et encore plus préférablement compris entre 5° et 20°.

7. Dispositif de production de boisson selon l'une quelconque des revendications 1 à 3, dans lequel la chambre du dispositif de chauffage présente essentiellement la forme d'un cylindre, ledit cylindre étant tronqué sur au moins sa base supérieure (31a), et la sortie d'air (35) de la chambre du dispositif de chauffage est positionnée sur ladite base supérieure tronquée (31b) du cylindre de la chambre.

8. Dispositif de production de boisson selon la revendication 7, dans lequel le cylindre de la chambre du dispositif de chauffage est tronqué par un plan (P) présentant un angle (α) avec le plan perpendiculaire à l'axe longitudinal de la chambre (XX') d'au moins 1°, de préférence d'au moins 5°, et encore plus préférablement compris entre 5° et 20°.

9. Dispositif de production de boisson selon l'une quelconque des revendications précédentes, dans lequel l'entrée de liquide (32) et la sortie de liquide (33) de la chambre du dispositif de chauffage sont positionnées en des parties opposées (31a, 31b) de la chambre.

10. Dispositif de production de boisson selon l'une quelconque des revendications précédentes, dans lequel la sortie de liquide (33) est munie d'une soupape à liquide (4) et la sortie d'air (35) est munie d'une valve à air (5).

11. Dispositif de production de boisson selon la revendication 1, dans lequel la valeur de la pression pour l'ouverture de la soupape à liquide (4) est supérieure à celle de la valve à air (5).

12. Dispositif de production de boisson selon l'une quelconque des revendications précédentes, dans lequel le dispositif de chauffage est muni d'un capteur de température (6).

13. Dispositif de production de boisson selon la revendication précédente, dans lequel le corps chauffant (34) est relié de manière fonctionnelle au capteur de température (6).

14. Dispositif de production de boisson selon l'une quelconque des revendications précédentes, dans lequel le corps chauffant (34) présente la forme d'une spirale et la chambre du dispositif de chauffage (31) est creusée le long de son axe central de manière à former un anneau dans lequel est installée la spirale.

15. Dispositif de production de boisson selon la revendication 1, dans lequel :
- la sortie d'air (35) est munie d'une valve à air (5),
- le dispositif de chauffage est muni d'un capteur de température (6),
le corps chauffant (34) présente la forme d'une spirale et la chambre du dispositif de chauffage (31) est creusée le long de son axe central de manière à former un anneau dans lequel est installée la spirale,
et dans lequel le dispositif de chauffage comprend un support commun pour attacher un connecteur de sortie à la chambre de production de boisson (331), la valve à air (5) et le capteur de température (6) à la chambre du dispositif de chauffage (31).
